# EUROPEAN PATENT APPLICATION

(11) **EP 2 639 685 A2**
(43) Date of publication of application: **18.09.2013**
(21) Application number: 12182577.2
(22) Date of filing: 31.08.2012
(51) Int. Cl.: G06F 3/0488, G06F 3/0483

(54) **Portable electronic apparatus, control method of portable electronic apparatus, and control program thereof**

(30) Priority: 16.03.2012 JP 2012060420
(71) Applicant: Kabushiki Kaisha Toshiba, Tokyo 105-8001 (JP)
(72) Inventor: Kazawa, Hiroshi, Tokyo 105-8001 (JP); Nakamura, Takashi, Tokyo 105-8001 (JP); Nunome, Tadatsugu, Tokyo 105-8001 (JP)
(74) Representative: HOFFMANN EITLE

(57) **Abstract**

According to one embodiment, an electronic apparatus includes a display (111) which also serves as a touch operation input unit, and a display controller (1103). The display controller (1103) includes a standby state output unit (1211) and a scroll controller (1212). The standby state output unit (1211) displays, on the display, at least one of the images as a first image, and a second image as an array of a plurality of tabs. If the user swipes the display area of the second image, the scroll controller controls the plurality of tabs to scroll while maintaining the first image as a front image.

## Description

Embodiments described herein relate generally to a portable electronic apparatus, a control method of a portable electronic apparatus, a control program thereof, and a medium storing that control program.

Various portable electronic apparatuses have begun to prevail. In a portable electronic apparatus, a display normally serves as a touch operation input unit. A portable electronic apparatus can be used while being switched to various use applications. The use applications of the portable electronic apparatus include, for example, a mobile phone, a remote controller for a television receiver, that for a recorder/player, a terminal used to access the Internet, a digital camera, and so forth. For this purpose, the portable electronic apparatus is switched to various images, so that .the screen of its display serves as an operation unit suited to a given use application. As the number of use applications increases, the number of tabs required to obtain desired operation panels increases. When the number of tabs is large, if all of a large number of tabs are displayed on the display, each tab has a small size. For this reason, it becomes difficult for the user to search for a desired tab, and to select the desired tab. A technique which automatically adjusts a scroll amount by arraying a plurality of tabs in a bar pattern so as to allow the user to confirm many tabs by a single operation has been developed.

As the number of tabs increases, a tab check period and desired tab search period are prolonged. As a result, a hiding period of a selected main operation panel is prolonged, and the user may often miss an important change on the selected main operation panel. Also, it takes much time to return to an image display state of the selected main operation panel.

A general architecture that implements the various features of the embodiments will now be described with reference to the drawings. The drawings and the associated descriptions are provided to illustrate the embodiments and not to limit the scope of the invention.
FIG. 1 is an exemplary view showing the outer appearance of a portable electronic apparatus to which an embodiment is applied, and a part of the apparatus in an enlarged scale;
FIG. 2 is an exemplary view showing an example when a plurality of tabs are scrolled on the portable electronic apparatus to which the embodiment is applied;
FIG. 3 is an exemplary view showing another example when a plurality of tabs are scrolled on the portable electronic apparatus to which the embodiment is applied;
FIG. 4 is an exemplary view showing an example when a plurality of tabs are swiped on the portable electronic apparatus to which the embodiment is applied;
FIG. 5 is an exemplary view showing an example when a plurality of tabs are swiped and a selected screen is opened and set in a standby state on the portable electronic apparatus to which the embodiment is applied;
FIG. 6 is an exemplary view showing another example when a plurality of tabs are swiped and a selected screen is opened and set in a standby state on the portable electronic apparatus to which the embodiment is applied;
FIG. 7 is an exemplary view showing an example of the block arrangement of the portable electronic apparatus to which the embodiment is applied;
FIG. 8 is an exemplary view showing a flowchart required to explain an operation example of the portable electronic apparatus to which the embodiment is applied;
FIG. 9 is an exemplary view showing one use example of the portable electronic apparatus to which the embodiment is applied;
FIG. 10 is an exemplary view showing another use example of the portable electronic apparatus to which the embodiment is applied;
FIG. 11 is an exemplary view showing a tab display example according to another embodiment of the portable electronic apparatus;
FIG. 12 is an exemplary view showing a tab display example according to still another embodiment of the portable electronic apparatus; and
FIG. 13 is an exemplary view showing a tab.display example according to yet another embodiment of the portable electronic apparatus.

Various embodiments will be described hereinafter with reference to the accompany drawings.

In general, according to one embodiment, there are provided an electronic apparatus, a control method of an electronic apparatus, a control program thereof, and a medium storing that control program. They allow the user to facilitate checking of a plurality of tabs and a tab search while maintaining a display state of a main panel.

According to an embodiment of the present disclosure, an electronic apparatus includes a display which also serves as a touch operation input unit, and a display controller which outputs images to be displayed on the display. The display controller includes a standby state output unit and a scroll controller. The standby state output unit displays, on the display, at least one of the images as a first image, and a second image as an array of a plurality of tabs on an area different from a display area of the first image. If the user swipes the display area of the second image, the scroll controller controls to scroll the plurality of tabs while maintaining the first image as a frontmost image.

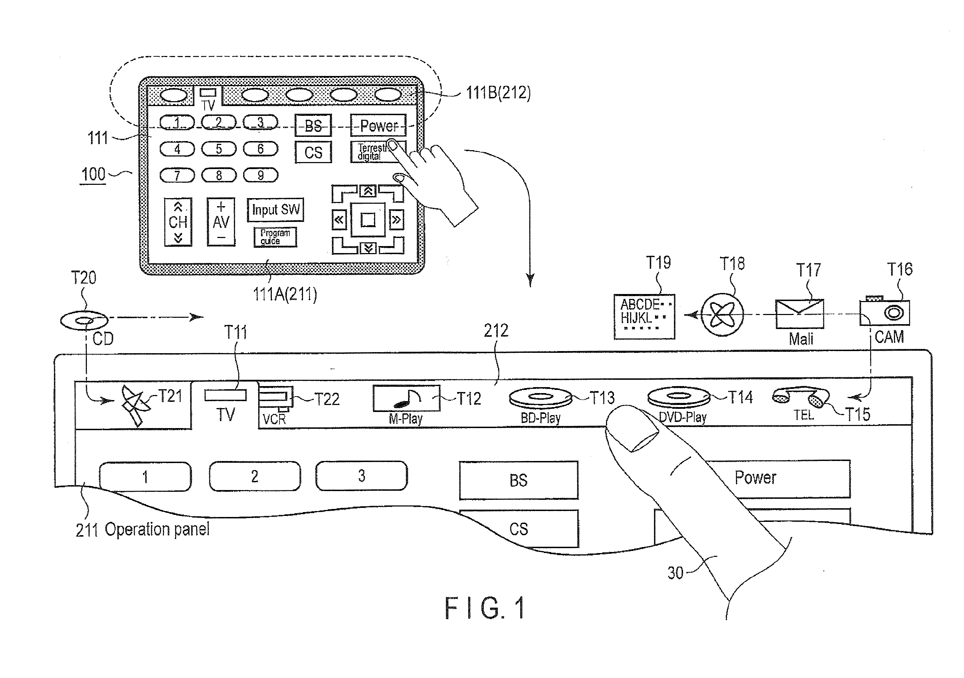

An embodiment will further be described with reference to the drawings. FIG. 1 shows the outer appearance of a portable electronic apparatus, as an example of a device, to which the embodiment is applied, and a part of the apparatus in an enlarged scale. The portable electronic apparatus includes a personal computer, tablet, mobile phone, cellular phone, iPhone, smartphone, digital book reader, Internet connection device, remote controller, player, satellite navigator, car-mount display, and the like. That is, the portable electronic apparatus is not limited to this term, and is widely applied.

Reference number 100 denotes an electronic apparatus. A display 1.11 can display an image, and is also used as a touch operation input unit. The display 111 can include a first display area 111A and second display area 111B to be described later. An upper view of FIG. 1 shows a whole image of the portable electronic apparatus 100 when viewed from the front side. A lower view of FIG. 1 shows a part of the upper view bounded by the broken line in an enlarged scale.

FIG. 1 shows a standby state in which an operation panel 211 of a television (TV) receiver is displayed as a frontmost image. This operation panel 211 displays a numeric keypad, broadcast (Direct Broadcast Satellite (DBS), terrestrial digital broadcast) selection keys, power-on/off key, audio adjustment key, input switching key, program guide display key, cursor keys, enter key, and the like, which are included in a remote controller. The user can control the TV receiver to a desired operation state by tapping these keys. The electronic apparatus at this time can function as a remote controller of the TV receiver.

The operation panel 211 is displayed on the first display area 111A. An image displayed on this first display area 111A will be referred to as a first image hereinafter.

Furthermore, on the display 111, the second display area 111B which displays a plurality of tabs (also called icons) as a second image is assured in addition to the display area of the first image (operation panel 211). The second image (tab array panel 212) of this second display area 111B is displayed in an exposed state on a partially notched portion of the first image or a window of a first two-dimensional image. That is, on a display area of the display, the second image is displayed on an area different from the first image. The first and second images can be viewable as a relationship of a foreground image (bright image) and background image (dark image).

In the example of FIG. 1, the horizontally elongated second display area 111B is assured on an upper portion of the first display area 111A on the display 111. Also, a tab T11 corresponding to the operation panel 211 of the first display area 111A is displayed to be superposed on the second display area 111B.

A state in which the first display area 111A and second display area 111B are stably displayed on the display 111, as described above, will be referred to as a standby state hereinafter. However, this embodiment is not limited to this nominal designation, and various other designations may be used.

The second image displayed on the second display area 111B displays a plurality of tabs selectable by the user.

In the example of FIG. 1, there are displayed a tab T12 related to an operation panel of a media player, a tab T13 related to an operation panel of a Blu-ray Disc (BD) player, a tab T14 related to operation panel of a Digital Versatile Disc (DVD) player, a tab T15 related to an operation panel of a mobile phone, a tab T16 related to a digital camera operation panel, a tab T17 related to an operation panel required to send an e-mail message, a tab T18 related to an operation panel required for Internet connection, a tab T19 related to an operation panel required for a document input, a tab T20 related to an operation panel of a Compact Disc (CD) player, a tab T21 related to an operation panel required for satellite broadcast reception (for example, GPS), a tab T22 related to an operation panel of a VCR, and so forth. This example introduces only some of a large number of tabs(not shown). Nominal designations or display modes of the tabs are not limited to those described herein, and various other nominal designations or display modes may be used.

When the user makes a tap operation, that is, he or she touches a desired tab, a panel related to that tab can be displayed on the first display area 111A as the first image.

When the number of tabs increases, as described above, it is impossible to display all tabs within the second display area 111B. When tabs are displayed as much as possible, each tab size is reduced, and a spacing between neighboring tabs is also reduced, resulting in inconvenience for operations to cause operation errors.

Hence, in this embodiment, each individual tab size is not changed, and a spacing between neighboring tabs is maintained to be a size that can be easily operated by the user. Then, when the user swipes the tab array panel 212 (second image), the plurality of tabs can be scrolled while maintaining the operation panel 211 (first image) as a frontmost image.

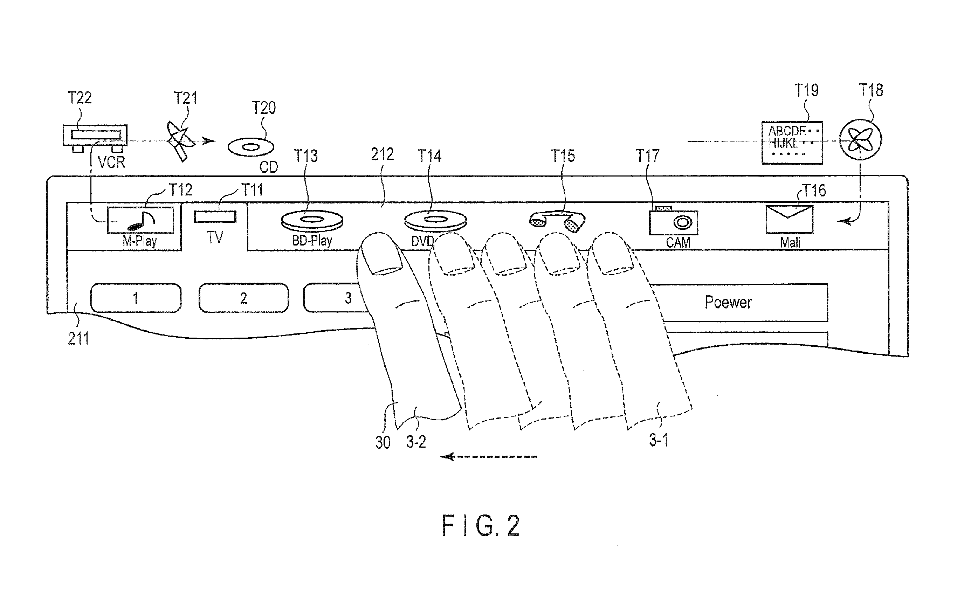

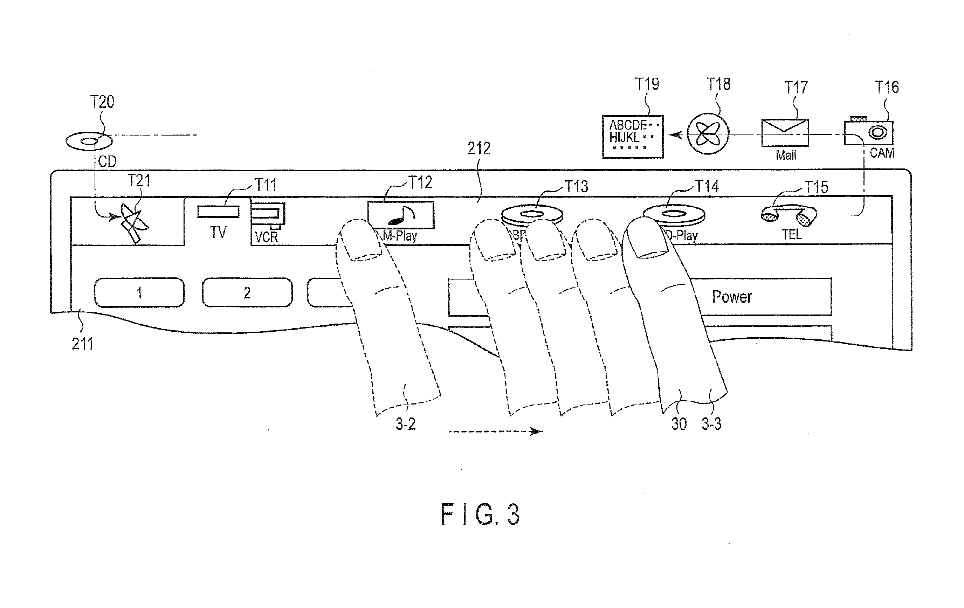

FIGS. 2 and 3 show scrolling states of the plurality of tabs. FIG. 2 shows an example when a hand 30 shown in FIG. 1 slidably moves (that is, to make so-called a swipe operation) from a position 3-1 in the left direction to a position 3-2 in FIG. 2. In this case, tabs T21 and T22 which are displayed on the left side of the second display area in FIG. 1 disappear from the tab array panel 212, and tabs T16 and T17 newly appear on the right side of the tab array panel 212.

FIG. 3 shows an example when the hand 30 shown in FIG. 2 slidably moves (to make so-called a swipe operation) from position 3-2 in the right direction to a position 3-3 in FIG. 3. In this case, tabs T22 and T21 appear on the left side of the tab array panel 212 and tabs T16 and T17 disappear from the right side of the tab array panel 212 in FIG. 3.

As described above, when the user wants to search for a tab of interest, he or she can conduct the search while maintaining to display the first image (in this case, the TV operation panel). As a matter of course, the tab image size and spacing between neighboring tabs can be set to be easily operable sizes.

As described above, the plurality of tabs of the tab array panel can be scrolled while maintaining to display the first image. For this reason, the user can be prevented from missing an important display of the first image at a high possibility. For example, the user can scroll tabs while he or she is walking in a display state of a navigation map as the first image. For example, the user can search for a tab of a guide screen that offers favorite restaurants while displaying the navigation map.

When the user wants to return to an original panel, he or she need not select a tab again. Thus, usability can be improved.

Also, this embodiment allows the user to make a setting operation to enlarge or reduce the second display area that displays the second image. Also, the user can adjust the spacing between neighboring tabs.

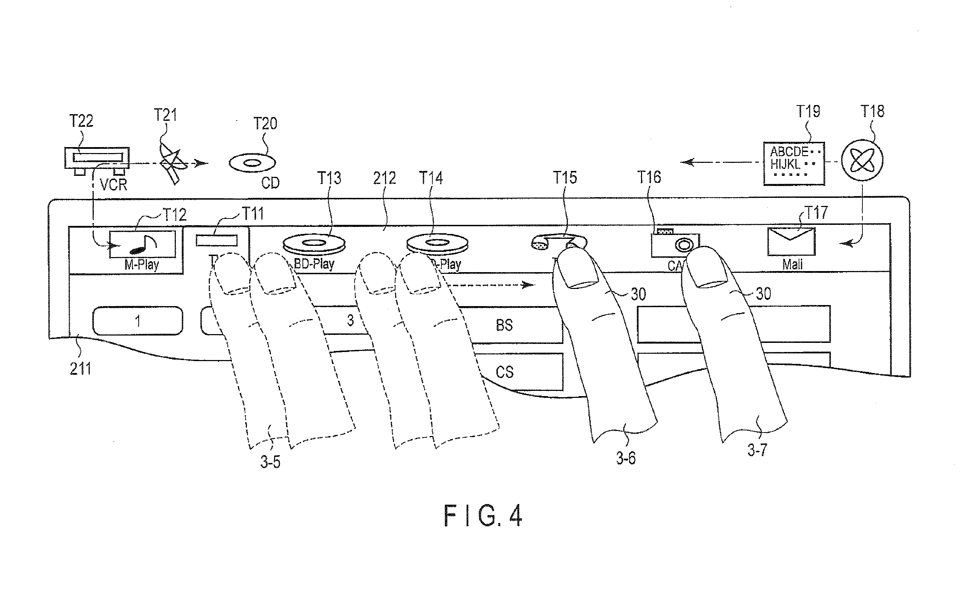

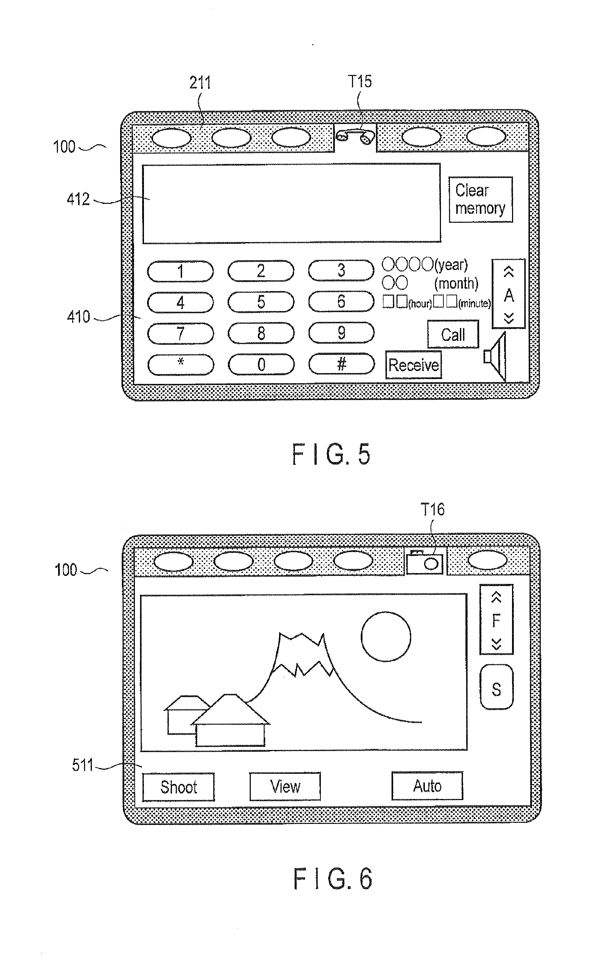

FIGS. 4, 5, and 6 are views for explaining other operation examples of this embodiment. This embodiment allows the user to effectively utilize a state in which the plurality of tabs are displayed. For example, assume that the finger of the user touches tab T11 of the first image displayed on the frontmost surface, swipes the second image area 111B, and stops at the position of tab T15. That is, the finger of the hand 30 slides from a position 3-5 and stops at a position 3-6. Then, as shown in FIG. 5, a mobile phone operation panel 410 is opened. The mobile phone operation panel 410 displays telephone number input keys. The user touches the telephone number input keys and can set a telephone number. The set telephone number is displayed on a number display field 412. Also, a call origination button, call reception button, and the like are displayed.

Assume that from the state shown in FIG. 4, the user's finger touches tab T11 of the first image displayed on the frontmost surface, swipes the second image area 111B in this state, and stops at the position of tab T16. More specifically, the finger of the hand 30 slides from position 3-5 and stops at a position 3-7. Then, as shown in FIG. 6, a digital camera operation panel 511 appears. In the digital camera operation panel 511, a button used to set a view mode, a button used to set a shooting mode, a focus button, a shutter button, an image display area, and the like are assured.

As described above, with this apparatus, when the user touches a tab of a panel which is currently displayed on the frontmost surface with the finger, and swipes the tab array panel, panel screens corresponding to tabs can be opened in turn one by one at an appropriate moving speed of the finger.

That is, using a touch operation on a tab of the first image as a starting point, the touch state is sequentially moved on the plurality of tabs on a second two-dimensional screen, a screen which appears on the frontmost surface is sequentially switched to screens related to the touched tabs. For this reason, the user can confirm images related to the plurality of tabs in turn.

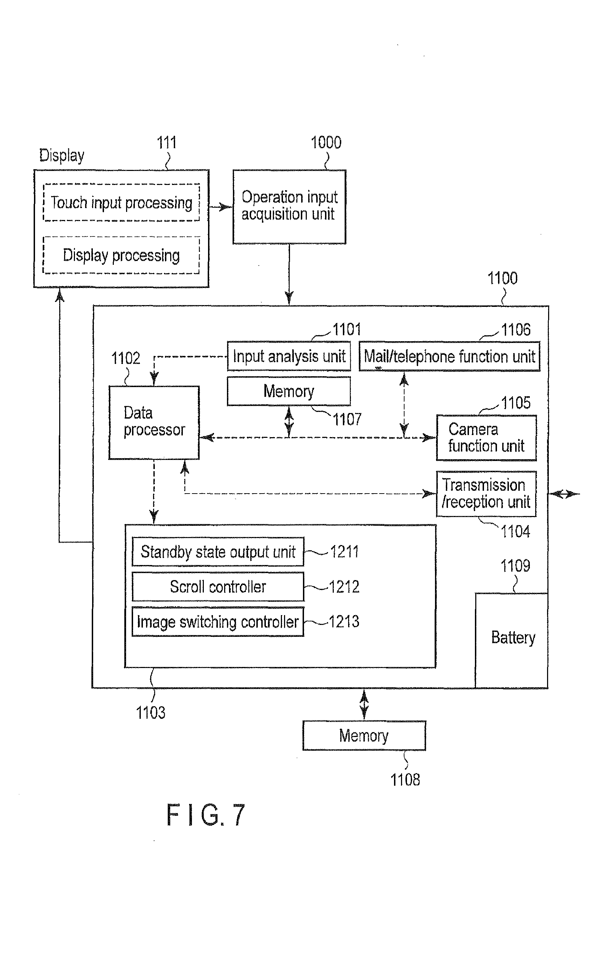

FIG. 7 shows the representative block arrangement in the aforementioned electronic apparatus 100. An operation input, which is input from the display 111, is acquired by an operation input acquisition unit 1000, and is supplied to a controller 1100. The controller 1100 controls an input analysis unit 1101 to analyze the contents (command) of the operation input. Data as an analysis result of the input analysis unit 1101 is input to a data processor 1102.

The data processor 1102 supplies control signals to blocks of respective units in accordance with the operation input, so as to reflect the operation contents to the apparatus operation. The data processor 1102 can control a display controller 1103, transmission/reception unit 1104, camera function unit 1105, mail/telephone function unit 1106, and memories 1107 and 1108.

The display controller 1103 includes a standby state output unit 1211 required to obtain the aforementioned standby state, scroll controller 1212, and image switching controller 1213. Upon detection of the aforementioned swipe operation input, the scroll controller 1212 controls to scroll the tab array panel 212 as the second image. Upon detection of a tap operation with respect to a given tab, the image switching controller 1213 can open a panel related to the selected tab as the first image. Also, upon detection of the sliding operation described using FIGS. 4, 5, and 6, the image switching controller 1213 can open a panel related to the lastly selected tab as the first image.

The memory 1107 is used as a temporary expanding area of an application to be used and/or a temporary saving area of data upon execution of document input processing. The memory 1108 is used as, for example, an area for pre-storing a plurality of applications and an area for saving image data of various operation panels and the like. The memory 1108 may be exchangeable. Reference number 1109 denotes a rechargeable battery.

The aforementioned controller 1100 may also be called a computer, processor, or control device. The controller 1100 can execute desired operations in response to instructions, and can display desired images on the display. A program having the instructions is read from, for example, the memory 1108, and is used in the controller 1100.

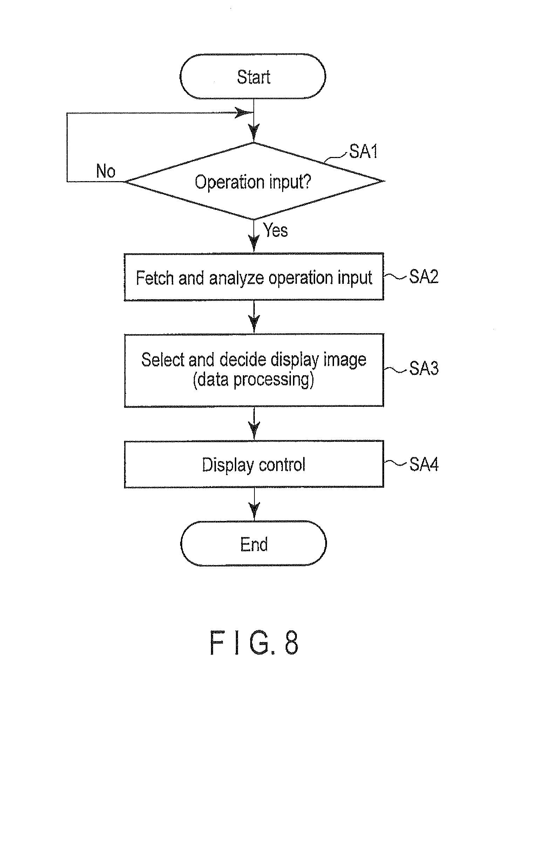

FIG. 8 is a flowchart showing operations from when an operation input is detected until an image to be displayed on the display 111 is decided. It is determined whether or not an operation input is detected (step SA1). If an operation input is detected, it is fetched and analyzed (step SA2). In accordance with the operation input, an image to be displayed on the display 111 is selected and decided (step SA3). Next, display control of the selected image is executed (step SA4).

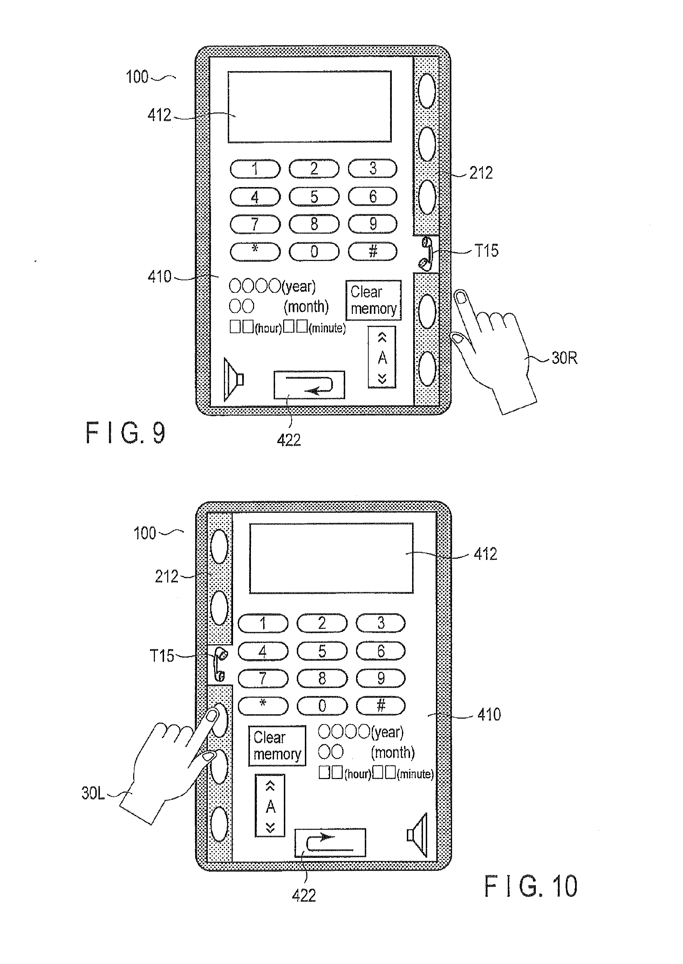

This apparatus is not limited to the aforementioned embodiment. FIGS. 9 and 10 show an example when the mobile phone operation panel 410 is displayed as the first image. FIG. 5 above shows the example in which the apparatus 100 is operated at a landscape position. However, FIGS. 9 and 10 show the example in which the apparatus is operated at a portrait position. In this case, the tab array panel 212 is displayed on the right or left side of the display. Depending on the right- or left-handed user, the tab array panel 212 may be switched to be displayed on the right side (FIG. 9) or the left side (FIG. 10). A switching button 422 used to attain this switching operation may be displayed.

When the user selects a desired tab, an operation panel related to the selected tab is displayed as the first image. As the user uses desired operation panels, some operation panels have high frequencies of use, but some others have low frequencies of use. This apparatus has a function of changing an array order of tabs displayed on the tab array panel 212 in accordance with the frequencies of use.

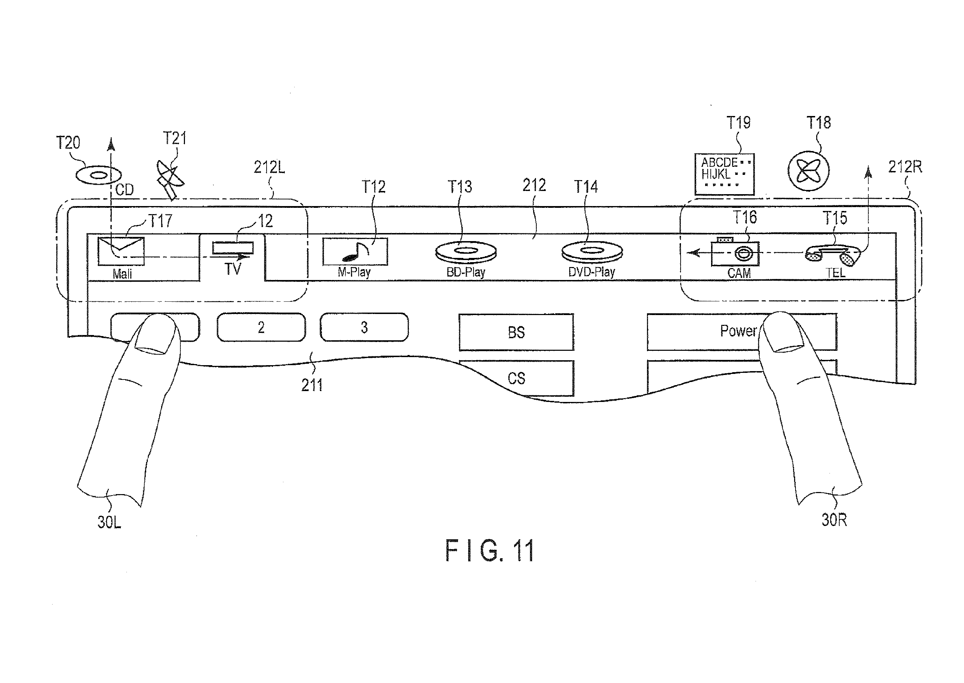

FIG. 11 shows a use example of the apparatus at the landscape position. In the tab array, tabs having high frequencies of use are gathered in a left dotted line region 212L and right dotted line region 212R. When the tab array is modified in this way, the user can easily select a desired tab with the finger of the left or right hand.

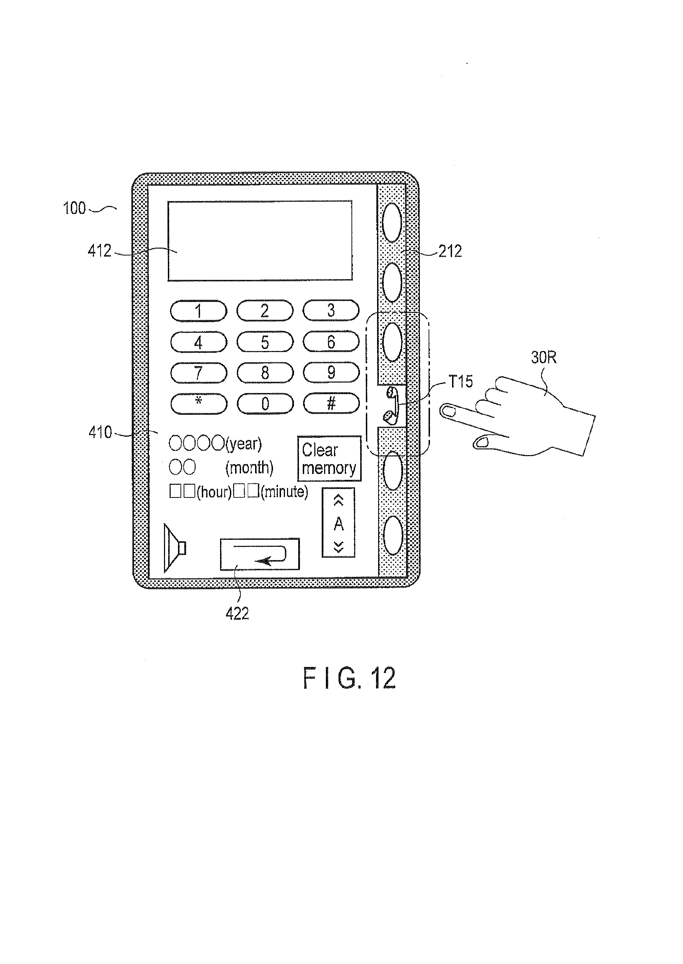

FIG. 12 shows a use example of the apparatus at the portrait position. In this case, tabs of panels with high frequencies of use are gathered in a central dotted line region 212C between the top and bottom positions.

For example, the display controller 1103 organizes information of the panels with high frequencies of use, and modifies the tab array.

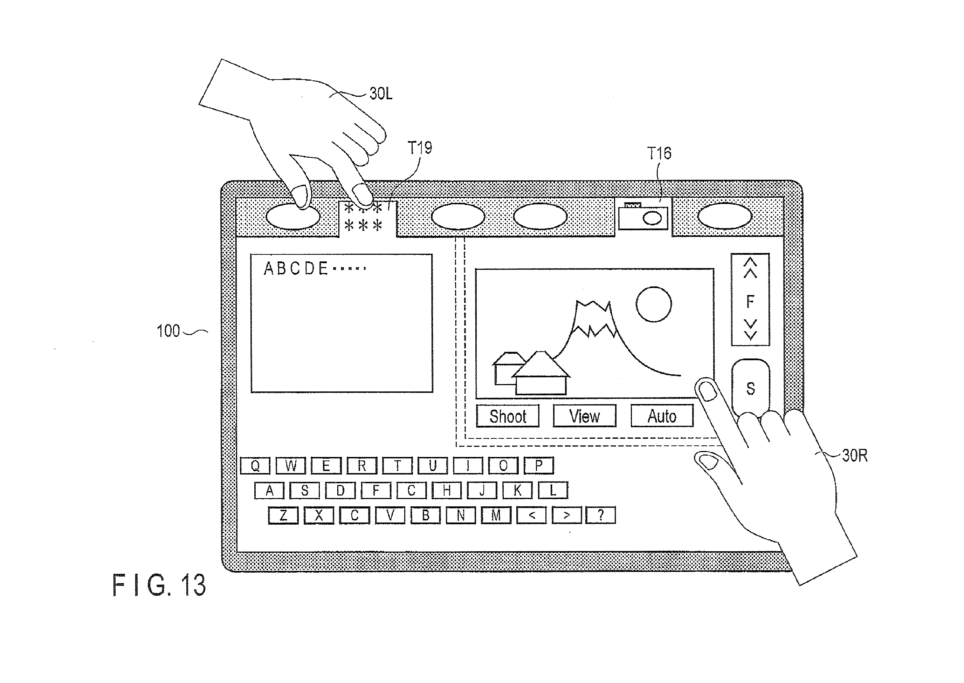

The functions of this apparatus are not limited to those of the above embodiment. FIG. 13 shows a display example of two screens. In order to attain a two-screen display state, the following operations are made. For example, assume that the digital camera operation panel 511 is initially displayed. In this state, assume that the user touches the digital camera operation panel 511 with the finger of, for example, a right hand 30R, and then taps another tab with the finger of, for example, a left hand 30L. Then, an operation panel related to the other tab is also displayed. In this case, the display111 is in the two-screen display state. The example of FIG. 13 shows a state in which a document input operation panel is opened.

The scope of the present invention includes a control program of the portable electronic apparatus. That is, the control program is a computer program required to read image data from a memory which stores image data of a plurality of images, and to control an image to be displayed on a display unit which is also used as a touch operation input unit.

An instruction included in the program can display, on the display, an arbitrary image of the plurality of images as a first image, and a tab array panel in which a plurality of tabs are arrayed as a second image in a state in which the tab array panel appears from a partial area of the first image. Also, an instruction can scroll the plurality of tabs while maintaining the first image as a frontmost image when a display area of the second image is swiped. Furthermore, an instruction can switch and display, as the frontmost image, a third image corresponding to an arbitrary tab in the display area of the plurality of tabs, which tab is selected by a tap input.

The scope of the present invention also covers a storage medium storing the aforementioned computer program.

The technical terms used above in relation to the embodiments and the names or technical terms described in the drawings are in no way restrictive. For example, the processor may be replaced with processing means, a processing unit, a block or a processing module. Likewise, the controller may be replaced with control means, a control unit, a control block or a control module. The unit may be replaced with means, a block or a module. The storage unit may be replaced with storage means, a storage, a storage block or a storage module.

## Claims

1. An electronic apparatus **characterized by** comprising:
a display (111) comprising a touch operation input unit; and
a display controller (1100) configured to control images to be displayed on the display,
the display controller comprising:
a standby state output unit (1211) configured to display, on the display, at least one of the images as a first image, and to display a second image as an array of a plurality of tabs in an area different from a display area of the first image; and
a scroll controller (1212) configured to scroll, if a display area of the second image is swiped, the plurality of tabs while maintaining the first image as a frontmost image.

2. The apparatus of claim 1, **characterized in that** the display controller further comprises:
an image switching controller (1213) configured to display, if a tap input is made to select a tab in the display area of the plurality of tabs, a third image corresponding to the selected tab as the frontmost image.

3. The apparatus of claim 1 or 2, **characterized in that** the display controller further comprises:
an image switching controller configured to sequentially switch, if the plurality of tabs on the second image are touched sequentially starting with a tab corresponding to the first image, images that appear as the frontmost images corresponding to the touched tabs.

4. The apparatus of one of claims 1 to 3, **characterized in that** the display controller further comprises:
a unit configured to display tabs that are used with high frequency at right and left sides or at a center of the array of the plurality of tabs.

5. A control method of an electronic apparatus, which comprises a display **characterized by** comprising a touch operation input unit, and a display controller configured to control images to be displayed on the display and an image display state, the method comprising:
displaying, on the display, at least one of the images as a first image, and displaying a second image as an array of a plurality of tabs in an area different from a display area of the first image; and
scrolling, if a display area of the second image is swiped, the plurality of tabs while maintaining the first image as a frontmost image.

6. The method of claim 5, **characterized by** further comprising:
switching and displaying, if a tap input is made to select a tab in the display area of the plurality of tabs, a third image corresponding to the selected tab as the frontmost image.

7. The method of claim 5 or 6, **characterized by** further comprising:
sequentially switching, if the plurality of tabs on the second image are touched sequentially starting with a tab corresponding to the first image, images that appear as the frontmost images corresponding to the touched tabs.

8. The method of one of claims 5 to 7, **characterized by** further comprising:
displaying tabs that are used with high frequency at right and left sides or at a center of the array of the plurality of tabs.

9. A control program of an electronic apparatus, which controls images to be displayed on a display **characterized by** comprising a touch operation input unit, the program comprising:
an instruction to display, on the display, at least one of the images as a first image, and to display a second image as an array of a plurality of tabs in an area different from a display area of the first image; and
an instruction to scroll, when the display area of the second image is swiped, the plurality of tabs while maintaining the first image as a frontmost image.

10. The program of claim 9, **characterized by** further comprising:
an instruction to switch and display, if a tap input is made to select a tab in the display area of the plurality of tabs, a third image corresponding to the selected tab as the frontmost image.

11. The program of claim 9 or 10, **characterized by** further comprising:
an instruction to sequentially switch, if the plurality of tabs on the second image are touched sequentially starting with a tab corresponding to the first image, images that appear as the frontmost images corresponding to the touched tabs.

12. The program of one of claims 9 to 11, **characterized by** further comprising:
an instruction to display tabs that are used with high frequency at right and left sides or at a center of the array of the plurality of tabs.
